# EUROPÄISCHE PATENTSCHRIFT

(11) **EP 3 803 235 B1**
(45) Veröffentlichungstag und Bekanntmachung des Hinweises auf die Patenterteilung: **06.07.2022**
(21) Anmeldenummer: 19739710.2
(22) Anmeldetag: 28.05.2019
(51) Int. Cl.: B65D 81/18, B65D 81/38, F25D 3/08

(54) **TRANSPORTBEHÄLTER ZUM TRANSPORT VON TEMPERATUREMPFINDLICHEM TRANSPORTGUT UND VERFAHREN ZUR HERSTELLUNG EINES SOLCHEN TRANSPORTBEHÄLTERS**
TRANSPORT CONTAINER FOR TRANSPORTING TEMPERATURE-SENSITIVE PRODUCTS AND METHOD FOR PRODUCING SUCH A TRANSPORT CONTAINER
CONTENEUR DE TRANSPORT POUR TRANSPORTER DES MARCHANDISES SENSIBLES À LA TEMPÉRATURE ET PROCÉDÉ DE FABRICATION D'UN TEL CONTENEUR DE TRANSPORT

(30) Priorität: 29.05.2018 AT 1572018
(43) Veröffentlichungstag der Anmeldung: 14.04.2021
(73) Patentinhaber: REP IP AG, 6302 Zug (CH)
(72) Erfinder: ROS, Nico, 4125 Riehen (CH)
(74) Vertreter: Keschmann, Marc
(86) Internationale Anmeldenummer: PCT/IB2019/054404
(87) Internationale Veröffentlichungsnummer: WO 2019/229646

(56) Entgegenhaltungen:
- EP-A1- 3 128 266
- WO-A1-00/11424
- WO-A1-2010/132726
- WO-A1-2017/207974
- WO-A1-2018/029522

## Beschreibung

Die Erfindung betrifft einen Transportbehälter zum Transport von temperaturempfindlichem Transportgut nach Anspruch 1, umfassend eine Kammer zur Aufnahme des Transportguts und eine die Kammer umschließende Hülle, wobei die Hülle wenigstens ein erstes Latentwärmespeicherelement umfasst, das mit der Kammer in Wärmeaustauschverbindung steht, wobei das Latentwärmespeicherelement aus einem Latentwärmespeichermaterial besteht, das ein bei Gebrauchstemperatur formstabiles Trägermaterial und ein in der Masse des Trägermaterials verteiltes Phasenwechselmaterial umfasst, sodass das wenigstens eine erste Latentwärmespeicherelement in einem Temperaturbereich sowohl unterhalb als auch oberhalb des Schmelzpunktes des Phasenwechselmaterials formstabil ist. Die Dokumente WO 2017/207974 A1, WO 2010/132726 A1, WO 00/11424 A1, WO 2018/029522 A1 sowie EP 3 128 266 A1 stellen den relevanten Stand der Technik zum Gegenstand der vorliegenden Erfindung dar. Beim Transport von temperaturempfindlichem Transportgut, wie z.B. Arzneimitteln, über Zeiträume von mehreren Stunden oder Tagen müssen vorgegebene Temperaturbereiche bei der Lagerung und dem Transport eingehalten werden, um die Verwendbarkeit und die Sicherheit des Transportguts zu gewährleisten. Für verschiedene Arzneimittel sind Temperaturbereiche von 2 bis 25°C, insbesondere 2 bis 8°C oder 15 bis 25°C als Lager- und Transportbedingungen festgeschrieben.

Der gewünschte Temperaturbereich kann oberhalb oder unterhalb der Umgebungstemperatur liegen, sodass entweder eine Kühlung oder eine Beheizung des Innenraums des Transportbehälters erforderlich ist. Wenn sich die Umgebungsbedingungen während eines Transportvorgangs ändern, kann die erforderliche Temperierung sowohl ein Kühlen als auch ein Beheizen umfassen. Damit der gewünschte Temperaturbereich beim Transport permanent und nachweislich eingehalten wird, werden Transportcontainer mit besonderem Isolationsvermögen eingesetzt. Diese Container werden mit passiven oder aktiven Temperierelementen ausgestattet.

Aktive Temperierelemente benötigen für Ihren Betrieb eine externe Energiezufuhr. Sie beruhen auf der Umwandlung einer nicht-thermischen Energieform in eine thermische Energieform. Die Abgabe oder Aufnahme von Wärme erfolgt dabei zum Beispiel im Rahmen eines thermodynamischen Kreisprozesses, wie z.B. mittels einer Kompressionskältemaschine. Eine andere Ausbildung von aktiven Temperierelementen arbeitet auf Grundlage des thermoelektrischen Prinzips, wobei sog. Peltier-Elemente eingesetzt werden. Aufgrund des aufwendigen Aufbaus der aktiven Temperierelemente sind Behälter dieser Art teuer und relativ groß. Weiters sind sie systembedingt auf eine Energiezufuhr angewiesen. Falls keine Energiezufuhr vorhanden ist, können die Behälter nicht gekühlt bzw. beheizt werden.

Passive Temperierelemente erfordern während der Anwendung keine externe Energiezufuhr, sondern nützen ihre Wärmespeicherkapazität, wobei es je nach Temperaturniveau zu einer Abgabe oder einer Aufnahme von Wärme an den bzw. aus dem zu temperierenden Transportbehälterinnenraum kommt.

Solche passiven Temperierelemente sind jedoch erschöpft, sobald der Temperaturausgleich mit dem Transportbehälterinnenraum abgeschlossen ist.

Eine besondere Form von passiven Temperierelementen sind Latentwärmespeicher, die thermische Energie in Phasenwechselmaterialien speichern können, deren latente Schmelzwärme, Lösungswärme oder Absorptionswärme wesentlich größer ist als die Wärme, die sie aufgrund ihrer normalen spezifischen Wärmekapazität speichern können. Nachteilig bei Latentwärmespeichern ist der Umstand, dass sie ihre Wirkung verlieren, sobald das gesamte Material den Phasenwechsel vollständig durchlaufen hat. Durch Ausführen des gegenläufigen Phasenwechsels kann der Latentwärmespeicher jedoch wieder aufgeladen werden.

Bei herkömmlichen gekühlten Transportbehältern kann Wasser/Eis als Latentwärmespeicher eingesetzt werden. Auch wenn die Menge an gespeicherter Energie in Wasser sehr groß ist, hat dieser Energiespeicher den Nachteil, dass der Phasenübergang bei 0°C stattfindet. Beim Phasenübergang wird am meisten Energie gespeichert. Für Medikamente sind allerdings andere Temperaturbereiche wichtig, z.B. 2 bis 20°C, 2 bis 8°C und 15°C bis 25°C.

Aus diesem Grund werden zunehmend Phasenwechselmaterialien eingesetzt, bei denen die Phasenübergangstemperatur in die benötigten Bereiche verschoben werden kann. Nachteilig bei diesen Materialien ist, dass sie nur unterhalb des Schmelzpunktes fest und somit formstabil sind. Oberhalb der Phasenübergangstemperatur sind Phasenwechselmaterialien flüssig und müssen daher in entsprechend geeigneten Behältern angeordnet sein, was allerdings mit hohen Kosten und einer geringen Effizienz verbunden ist. Am ineffizientesten sind Ausbildungen, bei denen das Phasenwechselmaterial in akkuähnliche Behälter abgefüllt wird, welche vor jedem Gebrauch des Transportbehälters ausgetauscht werden müssen. Diese Vorgehensweise erfordert zusätzliche Arbeit. Zudem ist die Wahrscheinlichkeit größer, dass unbeabsichtigt falsche Behälter, welche nicht den gewünschten Temperaturbereich abdecken, eingebaut werden. Auch wenn die akkuähnlichen Behälter fest in einem Transportbehälter verbaut sind, ist der Umgang mit Phasenwechselmaterialien nicht trivial. Phasenwechselmaterialien können durch verschiedenste Materialien hindurchdiffundieren, sodass spezielle Behälter erforderlich sind, welche dieses Verhalten unterbinden, was allerdings mit zusätzlichen Kosten verbunden ist. Zudem ist man bei der Form der Latentwärmespeicherbehälter eingeschränkt, was wiederum den Umgang beim Verbauen im Transportbehälter erschwert und mehr Platz und Gewicht benötigt.

Aus diesem Grund sind bereits Latentwärmespeicherelemente bekannt, die durch die Zugabe verschiedener Zusätze in einem Temperaturbereich sowohl unterhalb als auch oberhalb des Schmelzpunktes des Phasenwechselmaterials formstabil sind. Dadurch können die Probleme mit der Handhabung der Latentwärmespeicher vermieden werden. Insbesondere ist es nicht nötig, Latentwärmespeicher dieser Art in akkuähnlichen Behältern anzuordnen. Vielmehr können Latentwärmespeicher dieser Art als formstabile Elemente, beispielsweise in Plattenform, vorgefertigt und in speziell vorgesehene Aufnahmekammern des Transportbehälters eingebaut werden. Nachteilig ist jedoch auch hier, dass der Herstellungsaufwand des Transportbehälters auf Grund der großen Anzahl an Fertigungsschritten hoch ist. Weiters ist nachteilig, dass der Aufbau mit Rücksicht auf die Aufnahmekammern kompliziert ist, ein hohes Gewicht zur Folge hat und die Gestaltungsmöglichkeiten beschränkt sind. Die Erfindung zielt nunmehr darauf ab, einen Transportbehälter der eingangs genannten Art bereitzustellen, mit dem die oben genannten Nachteile überwunden werden können. Insbesondere soll der Transportbehälter geringe Herstellkosten, ein geringes Gewicht sowie eine geringe Wandstärke und gleichzeitig eine hohe Leistung, insbesondere einen hohen Isolationswert und ein großes Energiespeichervermögen aufweisen.

Die vorliegende Erfindung ist in den unabhängigen Ansprüchen 1 und 16 offenbart. Weitere Ausführungsbeispiele sind in den abhängigen Ansprüchen offenbart. Zur Lösung dieser Aufgabe sieht die Erfindung bei einem Transportbehälter der eingangs genannten Art im Wesentlichen vor, dass das wenigstens eine erste Latentwärmespeicherelement als die Kammer im Querschnitt gesehen wenigstens über den halben Umfang einteilig umgebendes Gussteil ausgebildet ist, wobei das Latentwärmespeicherelement durch Gießen des Latentwärmespeichermaterials hergestellt ist. Hierbei wird ausgenutzt, dass das Latentwärmespeichermaterial zwar erfindungsgemäß im Temperaturbereich um den Schmelzpunkt des Phasenwechselmaterials formstabil ist, aber bei hohen Temperaturen verflüssigt werden kann. Dadurch kann der Latentwärmespeicher gegossen werden und es lässt sich jede beliebige komplexe Form herstellen. Das ermöglicht große Freiheiten bei der Entwicklung und Optimierung von Transportbehältern insbesondere für Medikamente und bringt darüber hinaus einen großen Kostenvorteil. Insbesondere kann bei gleichem Platzbedarf mehr Latentwärmespeichermaterial im Transportbehälter angeordnet werden, wodurch die mögliche Kühl- bzw. Heizleistung des Transportbehälters erhöht wird. Auf Grund der Ausbildung des Latentwärmespeicherelements als Gussteil kann auf die gesonderte Herstellung von einzelnen plattenförmigen Elementen für jedes Wandelement des Transportbehälters verzichtet werden. Vielmehr können Latentwärmespeicherelemente geformt werden, die sich über einen größeren Umfang der Hülle erstrecken als über lediglich eine Wand des Transportbehälters, nämlich wenigstens über den halben Umfang. Die Hülle kann dadurch beispielswiese lediglich zwei oder drei Latentwärmespeicherelemente umfassen, welche die Kammer zusammen vollständig umschließen. Weiters kann die Herstellung dadurch vereinfacht werden, dass Teile des Hüllenaufbaus als Gussform für das oder die als Gusssteil hergestellte(n) Latentwärmespeicherelement(e) genutzt werden.

Bevorzugt ist vorgesehen, dass das wenigstens eine erste Latentwärmespeicherelement als die Kammer im Querschnitt gesehen über den gesamten Umfang einteilig umgebendes Gussteil ausgebildet ist. Das Latentwärmespeicherelement bildet hierbei einen die Kammer umgebenden Mantel, wobei lediglich die verbleibenden zwei Begrenzungsflächen, wie z.B. der Boden und die Decke ggf. gesondert mit einem Latentwärmespeicherelement versehen werden müssen. Bei dieser Ausführung ist die Anzahl der erforderlichen Teile für den Transportbehälter noch weiter reduziert und es wird dadurch ein einfacher und kostengünstiger, aber gleichzeitig effizienter Transportbehälter geschaffen.

Weiters ist bevorzugt vorgesehen, dass das wenigstens eine erste Latentwärmespeicherelement einen die Kammer umfangsmäßig vollständig umgebenden Mantelabschnitt und einen den Mantelabschnitt bodenseitig verschließenden Bodenabschnitt aufweist, wobei der Mantelabschnitt und der Bodenabschnitt miteinander einteilig ausgebildet sind. Allgemeiner gesagt kann das wenigstens eine erste Latentwärmespeicherelement einen die quaderförmige Kammer an fünf Flächen des Quaders vollständig und einteilig umgebendes Element ausgebildet sein. Dies ermöglicht eine weitere Reduzierung der erforderlichen Teile für den Transportbehälter, wobei lediglich die sechste Seite, wie z.B. ein einen Zugang zur Kammer öffnendes bzw. verschließendes Türelement, mit einem gesonderten Latentwärmespeicherelement versehen werden kann bzw. muss.

Bevorzugt ist hierbei vorgesehen, dass der Transportbehälter weiters einen Deckel oder eine Tür aufweist, um die Kammer zusammen mit den übrigen fünf Wänden, wie z.B. dem Mantel- und dem Bodenabschnitt, vollständig zu verschließen. Der Deckel bzw. die Tür kann hierbei wahlweise geöffnet werden, um einen Zugang zur Kammer zu ermöglichen. Der Deckel bzw. die Tür weist bevorzugt ebenfalls ein Latentwärmespeicherelement auf. Besonders bevorzugt ist der Deckel bzw. die Tür im Wesentlichen gleich aufgebaut wie die übrigen Wände, wie z.B. der Mantel- und der Bodenabschnitt. Bevorzugt weist der Deckel bzw. die Tür noch eine zusätzliche weitere Isolierschicht auf, um die Verbindung zwischen dem Deckel bzw. der Tür und dem Mantelabschnitt bestmöglich abzudichten.

Alternativ ist vorgesehen, dass weiters ein zweites, als Gussteil ausgebildetes Latentwärmespeicherelement vorgesehen ist, wobei das erste und das zweite Latentwärmespeicherelement zusammen einen die Kammer umfangsmäßig vollständig umgebenden Mantelabschnitt und ggf. einen den Mantelabschnitt bodenseitig verschließenden Bodenabschnitt bilden. Bei dieser Ausführung sind zumindest zwei Latentwärmespeicherelemente vorgesehen, die zusammen die Kammer mit Ausnahme des Deckels bzw. der Tür umgeben. Dieser Aufbau ermöglicht eine flexiblere Fertigung aus mehreren Teilen, die getrennt voneinander hergestellt werden und erst beim Zusammenbau des Transportbehälters entsprechend zusammengefügt werden. Es können auch drei oder mehr Latentwärmespeicherelemente vorgesehen sein. Beispielsweise können die Latentwärmespeicherelemente auch schichtweise übereinander angeordnet sein.

In einer bevorzugten Ausführung ist vorgesehen, dass die Hülle doppelwandig mit einer Innenwand und einer Außenwand und einem dazwischen angeordneten Hohlraum ausgebildet ist und dass das wenigstens eine erste Latentwärmespeicherelement im Hohlraum angeordnet ist. Falls mehrere Latentwärmespeicherelemente vorgesehen sind, sind bevorzugt alle Latentwärmespeicherelemente im Hohlraum angeordnet. Die Innenwand ist hierbei der Kammer zugewandt und begrenzt diese in einer bevorzugten Ausbildung. Die Außenwand wird bevorzugt durch die Außenwand des Transportbehälters gebildet. In diesem Hohlraum ist der Latentwärmespeicher bevorzugt zumindest abschnittsweise, besonders bevorzugt über den gesamten Umfang, an der Innenwand anliegend ausgebildet.

Weiters ist bevorzugt vorgesehen, dass das Phasenwechselmaterial aus Paraffin, bspw. n-Tetradecan oder n-Hexadecan, Ester, bspw. Methyl Ester, linearen Alkoholen, Ether, organischen Anhydriden, Salzhydraten, Wasser-Salz Gemischen, Salz-Lösungen und/oder wasserbasierten Lösungen gebildet ist. Diese Materialien haben den Vorteil, dass sie eine geeignete Phasenübergangstemperatur aufweisen.

Das Latentwärmespeicherelement umfasst neben dem Phasenwechselmaterial bevorzugt als Trägermaterial ein oder mehrere Copolymere, insbesondere Styrol-Block-Copolymer, und/oder Ethylen-Bytylen-Copolymer, um die Formstabilität des Latentwärmespeicherelements auch oberhalb des Schmelzpunktes des Phasenwechselmaterials sicherzustellen.

Bevorzugt ist vorgesehen, dass das Latentwärmespeicherelement in einem Temperaturbereich von 5°C, bevorzugt 10°C, besonders bevorzugt 15°C oberhalb der Phasenübergangstemperatur des Phasenwechselmaterials formstabil ist. Dadurch ist sichergestellt, dass das Latentwärmespeicherelement auch bei höheren Temperaturen weiterhin formstabil ist.

Ein besonders einfach und kostengünstig hergestellter Transportbehälter wird geschaffen, wenn das Latentwärmespeicherelement durch ein Spritzgießverfahren hergestellt ist. Spritzgießverfahren sind seit langem bekannt und daher einfach und sicher einsetzbar. Insbesondere können mit Spritzgießverfahren auch komplexe Formen in einfacher Weise hergestellt werden.

Weiters ist bevorzugt vorgesehen, dass das Phasenwechselmaterial eine Phasenübergangstemperatur von 3-10°C, insbesondere ca. 5°C, aufweist. Ein Transportbehälter mit einem ein solches Phasenwechselmaterial aufweisenden Latentwärmespeicher kann besonders gut für den Transport von Medikamenten verwendet werden.

Der Latentwärmespeicher besteht bevorzugt aus zumindest zwei Schichten, die besonders bevorzugt Phasenwechselmaterialien mit unterschiedlichen Phasenübergangstemperaturen aufweisen. Dadurch kann der gewünschte Temperaturbereich einfach und effizient festgelegt werden.

Um die Effizient des Transportbehälters weiter zu erhöhen, ist bevorzugt eine die Kammer umgebende Isolierschicht vorgesehen, die bevorzugt außerhalb des wenigstens einen ersten Latentwärmespeicherelements bzw. der Latentwärmespeicherschicht angeordnet ist. Die Isolierschicht ist also auf der der Kammer abgewandten Seite des Latentwärmespeicherelements angeordnet. Es können auch mehrere Isolierschichten übereinander angeordnet sein.

Um eine besonders gute Dämmung der Kammer zu erhalten, ist bevorzugt vorgesehen, dass die Isolierschicht von einem Gas, bspw. Luft, CO₂, Krypton, Xenon oder einer Mischung dieser Gase, gebildet ist, welche bevorzugt gegenüber der Umgebung einen Unterdruck aufweist.

Um die Dämmung einer mit einem Gas gefüllten Isolierschicht weiter zu verbessern, ist bevorzugt vorgesehen, dass die Isolierschicht durch zumindest eine innerhalb der Isolierschicht angeordnete Zwischenschicht, bevorzugt eine Folie, unterteilt ist. Die zumindest eine Zwischenschicht ist bevorzugt im Wesentlichen parallel zur Außen- und/oder Innenwand und bevorzugt einseitig oder zweiseitig mit einer Reflexionsschicht, insbesondere Aluminium beschichtet. Wenn die Dicke der Isolierschicht zu groß ist, kann innerhalb der Isolierschicht eine unerwünschte Konvektion stattfinden. Um dies zu verhindern, unterteilt die zumindest eine Zwischenschicht bevorzugt die Isolierschicht in zumindest zwei Bereiche mit jeweils geringerer Dicke. Da die ideale Schichtdicke bei unterschiedlichen Gasen unterschiedlich groß ist, ist bevorzugt vorgesehen, dass die Zwischenschichten derart ausgebildet sind, dass sie wahlweise in der Isolierschicht angeordnet bzw. aus der Isolierschicht herausgenommen werden können. Dadurch kann die Isolierschicht an das jeweils verwendete Gas angepasst werden. Bevorzugt kann die Zwischenschicht ein- oder beidseitig mit wärmereflektierenden Eigenschaften, insbesondere als Reflexionsschicht ausgebildet sein. Die Reflexionsschicht kann hierbei von einer metallischen, insbesondere gasdichten Schicht, vorzugsweise einer Schicht mit einem Emissionsgrad von < 0,5, vorzugsweise < 0,2, besonders bevorzugt < 0,04, wie z.B. einer Schicht aus Aluminium, gebildet sein.

Weiters ist bevorzugt vorgesehen, dass zwischen dem wenigstens einen ersten Latentwärmespeicherelement und der Isolierschicht eine Zwischenwand angeordnet ist, die bevorzugt an der der Isolierschicht zugewandten Seite mit einer Reflexionsschicht beschichtet ist. Durch diese Anordnung kann die Wärmeeinstrahlung in die Kammer weiter reduziert werden.

Alternativ ist bevorzugt vorgesehen, dass die Isolierschicht innen von dem wenigstens einen ersten Latentwärmespeicherelement begrenzt ist, wobei das wenigstens eine erste Latentwärmespeicherelement an der der Isolierschicht zugewandten Seite bevorzugt mit einer Reflexionsschicht beschichtet ist. Durch diese Anordnung kann die Wärmeeinstrahlung in die Kammer weiter reduziert werden, wobei weiters keine gesonderte Zwischenwand zwischen dem Latentwärmespeicherelement und der Isolierschicht nötig ist und daher der Aufbau des Transportbehälters vereinfacht ist.

In einer bevorzugten Ausführung ist vorgesehen, dass die Isolierschicht an der Außenseite von einer Außenwand begrenzt ist, die bevorzugt an der der Isolierschicht zugewandten Seite mit einer Reflexionsschicht beschichtet ist. Durch diese Anordnung kann die Wärmeeinstrahlung in die Kammer weiter reduziert werden.

Hierbei ist bevorzugt vorgesehen, dass die Reflexionsschicht(en) von einer metallischen, insbesondere gasdichten Beschichtung, vorzugsweise einer Beschichtung mit einem Emissionsgrad von < 0,5, vorzugsweise < 0,2, besonders bevorzugt < 0,04, wie z.B. einer Beschichtung aus Aluminium, gebildet ist bzw. sind. Wenn mehrere Reflexionsschichten vorgesehen sind, sind besonders bevorzugt alle Reflexionsschichten aus dem gleichen Material.

Der erfindungsgemäße Transportbehälter kann besonders bevorzugt quaderförmig sein, wobei fünf geschlossene Seiten vorgesehen sind und der Quader an einer Seite eine Öffnung aufweist, um die Kammer zu befüllen bzw. zu entleeren. Die Öffnung ist bevorzugt mit einem Deckel oder einer Tür verschließbar, der bzw. die weiters bevorzugt mit dem Transportbehälter verbunden ist, bspw. mit Scharnieren oder Bändern.

Weiters ist erfindungsgemäß ein Verfahren zur Herstellung eines erfindungsgemäßen Transportbehälters nach Anspruch 16 vorgesehen, wobei ein Latentwärmespeichermaterial bereitgestellt wird, das ein bei Gebrauchstemperatur formstabiles Trägermaterial und ein in der Masse des Trägermaterials verteiltes Phasenwechselmaterial umfasst, wobei das Latentwärmespeichermaterial durch Erwärmen verflüssigt wird und das wenigstens eine erste Latentwärmespeicherelement, bevorzugt das erste und ein zweites Latentwärmespeicherelement, durch ein Gießverfahren, insbesondere ein Spritzgießverfahren hergestellt werden, bei dem das verflüssigte Latentwärmespeichermaterial gegossen und erstarren gelassen wird. Dies ermöglicht eine einfache und kostengünstige Herstellung eines Transportbehälters.

Der Latentwärmespeicher kann bevorzugt direkt in einen durch eine Außenwand und/oder Innenwand des Transportbehälters gebildeten Hohlraum gegossen werden. Anschließend wird der Behälter ggf. fertiggestellt, bspw. indem die Außenwand und die Innenwand miteinander verbunden, insbesondere verschweißt werden.

Eine bevorzugte Verfahrensweise sieht vor, dass ein Innenwandkörper, der die quaderförmige Kammer an fünf Seiten begrenzende Innenwände ausbildet, zur Verfügung gestellt wird, um den Innenwandkörper herum ein Formwerkzeug positioniert wird, welches den Wänden des Innenwandkörpers jeweils parallel zugeordnete Formwände ausbildet, sodass zwischen den Wänden des Innenwandkörpers und den Wänden des Formwerkzeuges ein Hohlraum ausgebildet wird, in den Latentwärmespeichermaterial gegossen und erstarren gelassen und das Formwerkzeug danach entfernt wird. Eine bevorzugte Weiterbildung des Verfahrens sieht vor, dass die durch das Entfernen des Formwerkzeugs freigelegte Außenfläche des Latentwärmespeicherelements ggf. mit einer Reflexionsschicht, wie z.B. einer Metallfolie, insbesondere einer Aluminiumbeschichtung, versehen wird, der Innenwandkörper samt dem daran angeformten Latentwärmespeicherelement in einem Außenwandkörper positioniert wird, der den Außenflächen des Latentwärmespeicherelements jeweils parallel zugeordnete Außenwände ausbildet, sodass zwischen den Außenflächen des Latentwärmespeicherelements und den Wänden des Außenwandkörpers ein Hohlraum ausgebildet wird, der verschlossen und danach mit einem Gas befüllt wird. Ggf. kann die Innenfläche des Außenwandkörpers mit einer Reflexionsschicht, wie z.B. einer Metallfolie, insbesondere einer Aluminiumbeschichtung, versehen werden.

Das genannte Verfahren kann bevorzugt auch so abgewandelt werden, dass anstelle des Formwerkzeugs ein Zwischenwandkörper vorgesehen wird, der den Wänden des Innenwandkörpers jeweils parallel zugeordnete Zwischenwände ausbildet, sodass zwischen den Wänden des Innenwandkörpers und den Wänden des Zwischenwandkörpers ein Hohlraum ausgebildet wird, in den Latentwärmespeichermaterial gegossen und erstarren gelassen wird. Dies ermöglicht im Rahmen des Herstellungsverfahrens eine höhere Taktfrequenz, weil die Form für die Ausbildung des Gussteils, nämlich des Latentwärmespeicherelements, zu beiden Seiten des Hohlraums von einem formbegrenzenden Element, nämlich dem Innenwand- und dem Zwischenwandkörper begrenzt wird, der als Bestandteil des herzustellenden Transportbehälters verbleibt, sodass das Abkühlenlassen der Formhälften nach dem Gussprozess keine Stillstandszeiten eines andernfalls notwendigen gesonderten Formwerkzeugs erforderlich macht.

Der Zwischenwandkörper kann an der dem Latentwärmespeicherelement abgewandten Seite ggf. mit einer Reflexionsschicht, wie z.B. einer Metallfolie, insbesondere einer Aluminiumbeschichtung, versehen werden.

Der Innenwandkörper, der Außenwandkörper und ggf. der Zwischenwandkörper können aus einem Kunststoff, insbesondere jeweils als Spritzgussteil hergestellt sein.

Alternativ kann bevorzugt der Latentwärmespeicher zuerst in einer gesonderten Gießform gegossen und anschließend in dem Transportbehälter angeordnet werden.

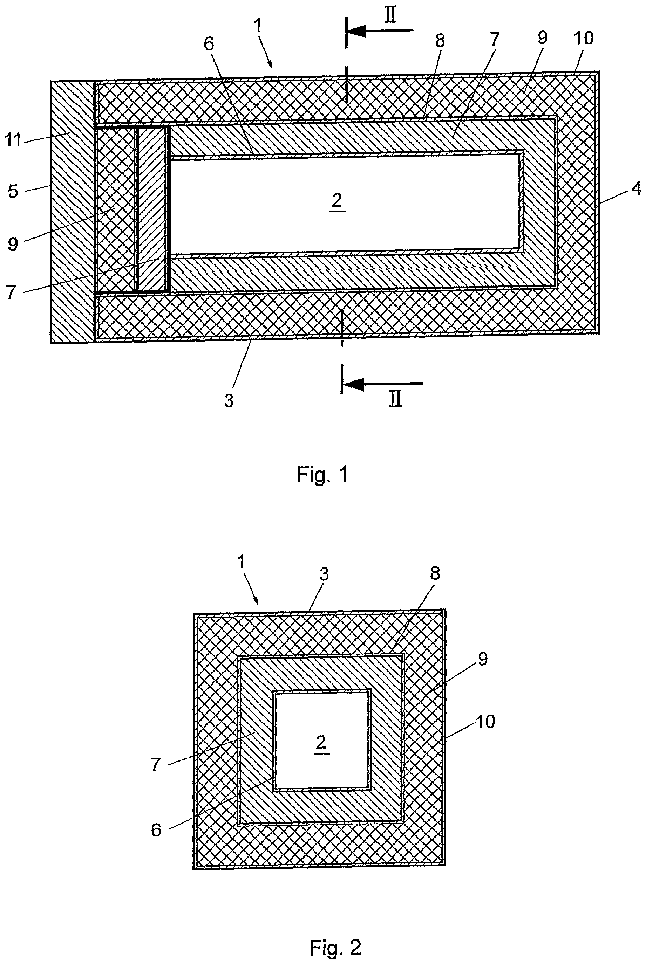

Die Erfindung wird nachfolgend anhand von in der Zeichnung schematisch dargestellten Ausführungsbeispielen näher erläutert. In dieser zeigt Fig. 1 einen erfindungsgemäßen Transportbehälter in einem ersten Schnitt und Fig. 2 den Transportbehälter gemäß Fig. 1 in einem zweiten Schnitt.

In Fig. 1 ist ein erfindungsgemäßer Transportbehälter im Längsschnitt dargestellt. Der Transportbehälter ist quaderförmig ausgebildet und umfasst eine Hülle 1, welche eine Kammer 2 allseitig umschließt. Die Kammer 2 dient der Aufnahme von Transportgut. Die Hülle 1 umfasst einen Mantelabschnitt 3, der in dem in Fig. 2 dargestellten Querschnitt die Kammer 2 umfangsmäßig, d.h. an vier Seiten, umgibt. Die Hülle 1 umfasst weiters einen mit dem Mantelabschnitt 3 einstückig verbundenen Bodenabschnitt 4, wobei der Mantelabschnitt 3 und der Bodenabschnitt 4 zusammen die Kammer 2 an fünf Seiten begrenzen. Die sechste Seite der Kammer 2 wird von dem Deckel 5 verschlossen, welcher öffenbar ist, um einen Zugang zur Kammer 2 freizugeben.

Die Hülle 1 weist im Mantelabschnitt 3 und im Bodenabschnitt 4 einen Schichtaufbau auf, der von innen nach außen betrachtet eine Innenwand 6, eine Schicht eines Latentwärmespeichers 7, eine Zwischenwand 8, eine Isolierschicht 9 und eine Außenwand 10 umfasst. Der Deckel 5 kann denselben Schichtaufbau aufweisen. Die Innenwände 6 der vom Mantelabschnitt 3 und vom Bodenabschnitt 4 gebildeten fünf Seiten bilden zusammen einen Innenwandkörper aus, der einstückig ausgebildet und vorzugsweise durch ein Spritzgussverfahren hergestellt ist. Die Zwischenwände 8 der vom Mantelabschnitt 3 und vom Bodenabschnitt 4 gebildeten fünf Seiten bilden zusammen einen Zwischenwandkörper aus, der einstückig ausgebildet und vorzugsweise durch ein Spritzgussverfahren hergestellt ist. Die Außenwände 10 der vom Mantelabschnitt 3 und vom Bodenabschnitt 4 gebildeten fünf Seiten bilden zusammen einen Außenwandkörper aus, der einstückig ausgebildet und vorzugsweise durch ein Spritzgussverfahren hergestellt ist.

Der durch den Innenwand- und den Zwischenwandkörper gebildete Hohlraum ist von einem Latentwärmespeicherelement 7 vollständig gefüllt, der als Gusskörper ausgebildet ist, wobei die Herstellung vorzugsweise so erfolgt, dass das Material des Latentwärmespeicherelements über den Erweichungspunkt hinaus erwärmt und in den Hohlraum gegossen und dann erstarren gelassen wird.

Der durch den Außenwand- und den Zwischenwandkörper gebildete Hohlraum ist von einem Gas vollständig gefüllt, wodurch eine isolierende Schicht 10 entsteht. Die dem Gasraum zugewandte Oberfläche der Zwischenwand 8 und/oder der Außenwand 10 kann vollflächig mit einer reflektierenden Beschichtung versehen sein.

In dieser Ausführung weist der Deckel 5 noch zusätzlich eine weitere Isolierschicht 11 auf, um die Verbindung zwischen dem Deckel 1 und dem Mantelabschnitt 3 abzudichten.

In Fig. 2 ist ein Querschnitt des erfindungsgemäßen Transportbehälters gemäß dem Schnitt II-II der Fig. 1 dargestellt. Es ist ersichtlich, dass der Latentwärmespeicher 7 die Kammer 2 über den gesamten Umfang einteilig umgibt. Auch die Innenwand 6, die Zwischenwand 8, die Isolierschicht 9 und die Außenwand 10 umgeben die Kammer 2 über den gesamten Umfang.

Bei einer alternativen, nicht dargestellten Ausbildung des Transportbehälters ist die Zwischenwand 8 weggelassen, sodass das Latentwärmespeicherelement 7 die Isolierschicht 9, d.h. den Gasraum, innenseitig begrenzt. Das Latentwärmespeicherelement 7 kann hierbei an der dem Gasraum zugewandten Oberfläche vollflächig mit einer reflektierenden Beschichtung versehen sein.

## Patentansprüche

1. Transportbehälter zum Transport von temperaturempfindlichem Transportgut, umfassend eine Kammer (2) zur Aufnahme des Transportguts und eine die Kammer (2) umschließende Hülle (1), wobei die Hülle (1) wenigstens ein erstes Latentwärmespeicherelement (7) umfasst, das mit der Kammer (2) in Wärmeaustauschverbindung steht, wobei das Latentwärmespeicherelement (7) aus einem Latentwärmespeichermaterial besteht, das ein bei Gebrauchstemperatur formstabiles Trägermaterial und ein in der Masse des Trägermaterials verteiltes Phasenwechselmaterial umfasst, sodass das wenigstens eine erste Latentwärmespeicherelement (7) in einem Temperaturbereich sowohl unterhalb als auch oberhalb des Schmelzpunktes des Phasenwechselmaterials formstabil ist, wobei das wenigstens eine erste Latentwärmespeicherelement (7) als die Kammer (2) im Querschnitt gesehen wenigstens über den halben Umfang einteilig umgebendes Gussteil ausgebildet ist, **dadurch gekennzeichnet, dass** das Latentwärmespeicherelement (7) durch Gießen des Latentwärmespeichermaterials hergestellt ist, wobei das Latentwärmespeichermaterial durch Erwärmen verflüssigt wird, wobei das verflüssigte Latentwärmespeichermaterial gegossen und erstarren gelassen wird.

2. Transportbehälter nach Anspruch 1, **dadurch gekennzeichnet, dass** das wenigstens eine erste Latentwärmespeicherelement (7) als die Kammer (2) im Querschnitt gesehen über den gesamten Umfang einteilig umgebendes Gussteil ausgebildet ist.

3. Transportbehälter nach Anspruch 1 oder 2, **dadurch gekennzeichnet, dass** das wenigstens eine erste Latentwärmespeicherelement (7) einen die Kammer (2) umfangsmäßig vollständig umgebenden Mantelabschnitt (3) und einen den Mantelabschnitt (3) bodenseitig verschließenden Bodenabschnitt (4) aufweist, wobei der Mantelabschnitt (3) und der Bodenabschnitt (4) miteinander einteilig ausgebildet sind.

4. Transportbehälter nach Anspruch 1 oder 2, **dadurch gekennzeichnet, dass** weiters ein zweites, als Gussteil ausgebildetes Latentwärmespeicherelement (7) vorgesehen ist, wobei das erste und das zweite Latentwärmespeicherelement (7) zusammen einen die Kammer (2) umfangsmäßig vollständig umgebenden Mantelabschnitt (3) und ggf. einen den Mantelabschnitt (3) bodenseitig verschließenden Bodenabschnitt (4) bilden.

5. Transportbehälter nach einem der Ansprüche 1 bis 4, **dadurch gekennzeichnet, dass** die Hülle (1) doppelwandig mit einer Innenwand (6) und einer Außenwand (10) und einem dazwischen angeordneten Hohlraum ausgebildet ist und das wenigstens eine erste Latentwärmespeicherelement (7) im Hohlraum angeordnet ist.

6. Transportbehälter nach einem der Ansprüche 1 bis 5, **dadurch gekennzeichnet, dass** das Phasenwechselmaterial aus Paraffin, bspw. n-Tetradecan oder n-Hexadecan, Ester, bspw. Methyl Ester, linearen Alkoholen, Ether, organischen Anhydriden, Salzhydraten, Wasser-Salz Gemischen, Salz-Lösungen und/oder wasserbasierten Lösungen gebildet ist.

7. Transportbehälter nach einem der Ansprüche 1 bis 6, **dadurch gekennzeichnet, dass** das Latentwärmespeicherelement (7) in einem Temperaturbereich von 5°C, bevorzugt 10°C, besonders bevorzugt 15°C oberhalb der Phasenübergangstemperatur des Phasenwechselmaterials formstabil ist.

8. Transportbehälter nach einem der Ansprüche 1 bis 7, **dadurch gekennzeichnet, dass** das Latentwärmespeicherelement (7) durch ein Spritzgießverfahren hergestellt ist.

9. Transportbehälter nach einem der Ansprüche 1 bis 8, **dadurch gekennzeichnet, dass** das Phasenwechselmaterial eine Phasenübergangstemperatur von 3-10°C, insbesondere ca. 5°C, aufweist.

10. Transportbehälter nach einem der Ansprüche 1 bis 9, **dadurch gekennzeichnet, dass** eine die Kammer (2) umgebende Isolierschicht (9) vorgesehen ist, die bevorzugt außerhalb des wenigstens einen ersten Latentwärmespeicherelements (7) bzw. der Latentwärmespeicherschicht (7) angeordnet ist.

11. Transportbehälter nach Anspruch 10, **dadurch gekennzeichnet, dass** die Isolierschicht (9) von einem Gas, bspw. Luft, CO₂, Krypton, Xenon oder einer Mischung dieser Gase, gebildet ist, welche bevorzugt gegenüber der Umgebung einen Unterdruck aufweist.

12. Transportbehälter nach Anspruch 10 oder 11, **dadurch gekennzeichnet, dass** zwischen dem wenigstens einen ersten Latentwärmespeicherelement (7) und der Isolierschicht (9) eine Zwischenwand (8) angeordnet ist, die bevorzugt an der der Isolierschicht (9) zugewandten Seite mit einer Reflexionsschicht beschichtet ist.

13. Transportbehälter nach Anspruch 10 oder 11, **dadurch gekennzeichnet, dass** die Isolierschicht (9) innen von dem wenigstens einen ersten Latentwärmespeicherelement (7) begrenzt ist, wobei das wenigstens eine erste Latentwärmespeicherelement (7) an der der Isolierschicht (9) zugewandten Seite bevorzugt mit einer Reflexionsschicht beschichtet ist.

14. Transportbehälter nach einem der Ansprüche 10 bis 13, **dadurch gekennzeichnet, dass** die Isolierschicht (9) an der Außenseite von einer Außenwand (10) begrenzt ist, die bevorzugt an der der Isolierschicht (9) zugewandten Seite mit einer Reflexionsschicht beschichtet ist.

15. Transportbehälter nach Anspruch 13 oder 14, **dadurch gekennzeichnet, dass** die Reflexionsschicht von einer metallischen, insbesondere gasdichten Beschichtung, vorzugsweise einer Beschichtung mit einem Emissionsgrad von < 0,5, vorzugsweise < 0,2, besonders bevorzugt < 0,04, wie z.B. einer Beschichtung aus Aluminium, gebildet ist.

16. Verfahren zur Herstellung eines Transportbehälters nach einem der Ansprüche 1 bis 15, wobei ein Latentwärmespeichermaterial bereitgestellt wird, das ein bei Gebrauchstemperatur formstabiles Trägermaterial und ein in der Masse des Trägermaterials verteiltes Phasenwechselmaterial umfasst und das wenigstens eine erste Latentwärmespeicherelement (7), bevorzugt das erste und ein zweites Latentwärmespeicherelement (7), durch ein Gießverfahren, insbesondere ein Spritzgießverfahren hergestellt werden, bei dem das verflüssigte Latentwärmespeichermaterial gegossen und erstarren gelassen wird, wobei das Latentwärmespeichermaterial durch Erwärmen verflüssigt wird.

## Claims

1. Transport container for transporting temperature-sensitive transport goods, comprising a chamber (2) for receiving the transport goods and a shell (1) enclosing the chamber (2), wherein the shell (1) comprises at least one first latent heat storage element (7), wherein the heat storage element (7) is arranged in a heat exchanging relationship with the chamber (2), wherein the latent heat storage element consists of a latent heat storage material that comprises a carrier material which is dimensionally stable at use temperature and a phase change material distributed within the mass of the carrier material, so that the at least one first latent heat storage element (7) is dimensionally stable in a temperature range both below and above the melting point of the phase change material, wherein the at least one first latent heat storage element (7) is designed as a cast part which surrounds the chamber (2) in one piece, seen in cross section, at least over half the circumference, **characterized in that** the latent heat storage element (7) is produced by casting the latent heat storage material, wherein the latent heat storage material is liquefied by heating, wherein the liquefied latent heat storage material is being cast and allowed to solidify.

2. Transport container according to claim 1, **characterized in that** the at least one first latent heat storage element (7) is formed as a cast part surrounding the chamber (2) in one piece, seen in cross section, over the entire circumference.

3. Transport container according to claim 1 or 2, **characterized in that** the at least one first latent heat storage element (7) has a jacket section (3) which completely surrounds the circumference of the chamber (2) and a bottom section (4) closing the jacket section (3) on the bottom side, wherein the jacket section (3) and the bottom section (4) are formed integrally with one another.

4. Transport container according to claim 1 or 2, **characterized in that** in addition a second latent heat storage element (7) designed as a cast part is provided, the first and the second latent heat storage elements (7) together forming a jacket section (3) which completely surrounds the circumference of the chamber (2) and optionally forming a bottom section (4) closing the jacket section (3) on the bottom side.

5. Transport container according to any one of claims 1 to 4, **characterized in that** the shell (1) is double-walled comprising an inner wall (6) and an outer wall (10) and a cavity arranged therebetween and the at least one first latent heat storage element (7) is arranged in the cavity.

6. Transport container according to any one of claims 1 to 5, **characterized in that** the phase change material is formed from paraffin, e.g. n-tetradecane or n-hexadecane, esters, e.g. methyl esters, linear alcohols, ethers, organic anhydrides, salt hydrates, water-salt mixtures, salt solutions and/or water-based solutions.

7. Transport container according to any one of claims 1 to 6, **characterized in that** the latent heat storage element (7) is dimensionally stable in a temperature range of 5°C, preferably 10°C, particularly preferably 15°C, above the phase transition temperature of the phase change material.

8. Transport container according to any one of claims 1 to 7, **characterized in that** the latent heat storage element (7) is produced by an injection molding process.

9. Transport container according to any one of claims 1 to 8, **characterized in that** the phase change material has a phase transition temperature of 3-10°C, in particular about 5°C.

10. Transport container according to any one of claims 1 to 9, **characterized in that** an insulating layer (9) surrounding the chamber (2) is provided, which is preferably arranged outside the at least one first latent heat storage element (7) or the latent heat storage layer (7) .

11. Transport container according to claim 10, **characterized in that** the insulating layer (9) is formed from a gas, for example air, CO₂, krypton, xenon or a mixture of these gases, which preferably has a negative pressure compared to the environment.

12. Transport container according to claim 10 or 11, **characterized in that** between the at least one first latent heat storage element (7) and the insulating layer (9) an intermediate wall (8) is arranged, which is preferably coated with a reflective layer on the side facing the insulating layer (9).

13. Transport container according to claim 10 or 11, **characterized in that** the insulating layer (9) is confined on the inside by the at least one first latent heat storage element (7), wherein the at least one first latent heat storage element (7) is preferably coated with a reflective layer on the side facing the insulating layer (9).

14. Transport container according to any one of claims 10 to 13, **characterized in that** the insulating layer (9) is confined on the outside by an outer wall (10) which is preferably coated with a reflective layer on the side facing the insulating layer (9).

15. Transport container according to claim 13 or 14, **characterized in that** the reflective layer consists of a metallic, in particular gas-tight coating, preferably a coating with an emissivity of <0.5, preferably <0.2, particularly preferably <0.04, such as a coating of aluminum.

16. A method for producing a transport container according to any one of claims 1 to 15, wherein a latent heat storage material is provided which comprises a carrier material which is dimensionally stable at use temperature and a phase change material distributed within the mass of the carrier material, that the latent heat storage material is liquefied by heating and that the at least one first latent heat storage element (7), preferably the first and a second latent heat storage element (7), are produced by a casting process, in particular an injection molding process, in which the liquefied latent heat storage material is cast and allowed to solidify, wherein the latent heat storage material is liquefied by heating.

## Revendications

1. Récipient de transport pour le transport de marchandises à transporter sensibles à la température, comprenant une chambre (2) pour recevoir les marchandises à transporter et une enveloppe (1) entourant la chambre (2), l'enveloppe (1) comprenant au moins un premier élément accumulateur de chaleur latente (7) qui se trouve en liaison d'échange thermique avec la chambre (2), l'élément accumulateur de chaleur latente (7) consistant en un matériau accumulateur de chaleur latente qui comprend un matériau de support de forme stable à la température d'utilisation et un matériau à changement de phase réparti dans la masse du matériau de support, de sorte que l'au moins un premier élément accumulateur de chaleur latente (7) soit de forme stable dans une plage de températures à la fois en dessous et au-dessus du point de fusion du matériau à changement de phase, dans lequel l'au moins un premier élément accumulateur de chaleur latente (7) est conçu comme une pièce moulée qui entoure la chambre (2) d'une seule pièce sur au moins la moitié de la circonférence, vue en coupe transversale, **caractérisé en ce que** l'élément accumulateur de chaleur latente (7) est produit par moulage du matériau accumulateur de chaleur latente, le matériau accumulateur de chaleur latente étant liquéfié par chauffage, le matériau accumulateur de chaleur latente liquéfié étant coulé et solidifié.

2. Récipient de transport selon la revendication 1, **caractérisé en ce que** l'au moins un premier élément accumulateur de chaleur latente (7) est réalisé sous la forme d'une pièce moulée entourant la chambre (2) d'une seule pièce sur toute la circonférence, vue en coupe transversale.

3. Récipient de transport selon la revendication 1 ou 2, **caractérisé en ce que** l'au moins un premier élément accumulateur de chaleur latente (7) présente une section de chemise (3) qui entoure complètement la chambre (2) sur la circonférence et une section de fond (4) qui ferme la section de chemise (3) sur le côté inférieur, la section de chemise (3) et la section de fond (4) étant formées d'une seule pièce l'une avec l'autre.

4. Récipient de transport selon la revendication 1 ou 2, **caractérisé en ce qu'**il est également prévu un deuxième élément accumulateur de chaleur latente (7) réalisé sous forme de pièce moulée, dans lequel le premier et le deuxième élément accumulateur de chaleur latente (7) forment ensemble une section de chemise (3) entourant complètement la chambre (2) sur la circonférence, et éventuellement une section de fond (4) qui ferme la section de chemise (3) sur le côté inférieur.

5. Récipient de transport selon l'une des revendications 1 à 4, **caractérisé en ce que** l'enveloppe (1) est à double paroi avec une paroi intérieure (6) et une paroi extérieure (10) et une cavité disposée entre elles, l'au moins un premier élément accumulateur de chaleur latente (7) étant disposé dans la cavité.

6. Récipient de transport selon l'une des revendications 1 à 5, **caractérisé en ce que** le matériau à changement de phase est constitué de paraffine, par exemple de n-tétradécane ou de n-hexadécane, d'ester, par exemple d'ester méthylique, d'alcools linéaires, d'éther, d'anhydrides organiques, d'hydrates de sel, des mélanges d'eau et de sels, des solutions salines et/ou des solutions à base d'eau.

7. Récipient de transport selon l'une des revendications 1 à 6, **caractérisé en ce que** l'élément accumulateur de chaleur latente (7) est de forme stable dans une plage de température de 5°C, de préférence de 10°C, de manière particulièrement préférée de 15°C au-dessus de la température de transition de phase du matériau à changement de phase.

8. Récipient de transport selon l'une des revendications 1 à 7, **caractérisé en ce que** l'élément accumulateur de chaleur latente (7) est fabriqué par un procédé de moulage par injection.

9. Récipient de transport selon l'une des revendications 1 à 8, **caractérisé en ce que** le matériau à changement de phase a une température de transition de phase de 3 à 10°C, en particulier d'environ 5°C.

10. Récipient de transport selon l'une des revendications 1 à 9, **caractérisé en ce qu'**une couche isolante (9) entourant la chambre (2) est prévue, qui est disposée de préférence à l'extérieur de l'au moins un premier élément accumulateur de chaleur latente (7) ou de la couche accumulateur de chaleur latente (7).

11. Récipient de transport selon la revendication 10, **caractérisé en ce que** la couche isolante (9) est formée d'un gaz, par exemple de l'air, du CO₂, du krypton, du xénon, ou d'un mélange de ces gaz, qui présente de préférence une pression négative par rapport à l' environnement.

12. Récipient de transport selon la revendication 10 ou 11, **caractérisé en ce qu'**une paroi intermédiaire (8) est disposée entre l'au moins un premier élément accumulateur de chaleur latente (7) et la couche isolante (9), qui est de préférence revêtue d'une couche réfléchissante sur la face tournée vers la couche isolante (9).

13. Récipient de transport selon la revendication 10 ou 11, **caractérisé en ce que** la couche isolante (9) est délimitée à l'intérieur par l'au moins un premier élément accumulateur de chaleur latente (7), l'au moins un premier élément accumulateur de chaleur latente (7) étant revêtu de préférence avec une couche réfléchissante sur la face tournée vers la couche isolante (9).

14. Récipient de transport selon l'une des revendications 10 à 13, **caractérisé en ce que** la couche isolante (9) est délimitée à l'extérieur par une paroi extérieure (10) qui est de préférence revêtue d'une couche réfléchissante sur la face tournée vers la couche isolante (9).

15. Récipient de transport selon la revendication 13 ou 14, **caractérisé en ce que** la couche réfléchissante est formée d'un revêtement métallique, en particulier étanche aux gaz, de préférence un revêtement avec une émissivité < 0,5, de préférence < 0,2, de manière particulièrement préférée < 0,04, tel que par exemple un revêtement d'aluminium.

16. Procédé de fabrication d'un récipient de transport selon l'une des revendications 1 à 15, dans lequel on fournit un matériau accumulateur de chaleur latente qui comprend un matériau de support de forme stable à la température d'utilisation et un matériau à changement de phase réparti dans la masse du matériau de support, et dans lequel l'au moins un premier élément accumulateur de chaleur latente (7), de préférence le premier et le second élément accumulateur de chaleur latente (7), sont produits par un processus de moulage, en particulier un processus de moulage par injection, dans lequel le matériau accumulateur de chaleur latente liquéfié est coulé et on le laisse se solidifier, le matériau accumulateur de chaleur latente étant liquéfié par chauffage.
